# EUROPEAN PATENT SPECIFICATION

(11) **EP 3 654 000 B1**
(45) Date of publication and mention of the grant of the patent: **03.11.2021**
(21) Application number: 19208668.4
(22) Date of filing: 12.11.2019
(51) Int. Cl.: G01F 1/66, G01F 15/14

(54) **ULTRASOUND FLOW METER CAPSULE**
ULTRASCHALLDURCHFLUSSMESSKAPSEL
CAPSULE DE DÉBITMÈTRE À ULTRASONS

(30) Priority: 13.11.2018 DK PA201870744
(43) Date of publication of application: 20.05.2020
(73) Proprietor: Kamstrup A/S, 8660 Skanderborg (DK)
(72) Inventor: Laursen, Peter Schmidt, DK-8660 Skanderborg (DK)
(74) Representative: Plougmann Vingtoft a/s

(56) References cited:
- EP-A1- 1 909 076
- EP-A1- 3 296 704
- WO-A1-2015/004254
- DE-A1-102005 001 897
- DE-U1-202009 016 421

## Description

### Field of the Invention

The present invention relates to an ultrasound flow meter capsule comprising a housing and an insert. The housing comprises an internal cavity having an open end and a closed end, and the insert may be arranged in the internal cavity of the housing and arranged to form an outer flow channel with a channel inlet at the cavity open end, a turning section at the cavity closed end and a measuring channel with a channel outlet. The internal cavity and the insert are configured to provide an intended flow direction from the channel inlet, via the outer flow channel, via the turning section, and via the measuring channel, to the channel.

The ultrasound flow meter capsule may be arranged for mounting in standardized base parts and configured to be operational regardless of rotational orientation when mounted.

### Background of the Invention

Ultrasonic signals are widely used for flow measurements as the propagation speed of sound waves in a fluid medium depends on their relative speed. An ultrasound flow meter contains a measuring section, through which the fluid medium flows, and a measuring path, along which ultrasonic waves are sent. Based on the measured propagation speed of the ultrasonic waves, the velocity of the fluid medium along the measurement path and thus the flow through the measuring device can be determined.

The length of the part of the measuring path that is parallel to the flow of the fluid medium section is an important criterion in terms of the accuracy to be achieved. Compact measuring devices and a high accuracy are generally contradictions in relation to ultrasound flowmeters. However, by increasing the linearity of the flow in the measuring section, an increased accuracy may be achieved and used to reduce the length of the measuring section as a trade-off or simply to increase the overall accuracy. Another aspect to consider may be the repeatability of the measurement and thus repeatability of the flow profile in the measuring section. This may be especially important for consumption meters where the measurements typically are directly used for yearly or quarterly settlements of a continuous consumption.

Ultrasound flow meters which can be connected using conventional water connection fittings/manifolds are known. For such meters the flow is redirected from the piping into the flow meter, and the challenges include creating a linear and repeatable flow in the measuring section, and preferably using only a short flow path in order to achieve a compact measuring device. Using only a single connection point for the flow meter may expectedly cause the fluid to be deflected several times inside the flow meter on the flow path from an inlet opening through the measuring tube and from there on to an outlet opening. Each deflection may inflict high flow resistance or pressure loss and introduce flow disturbances.

Document WO 2015/004254 A1 discloses an ultrasound flow meter capsule of the prior art.

### Object of the Invention

It is an objective to overcome one or more of the shortcomings of the prior art. This includes amongst other an objective of providing an ultrasonic based flow meter capsule arranged for mounting on a corresponding base part. The flow meter capsule preferably has a measuring path with sufficient length to provide precise flow measurements; and at the same time the capsule preferably has compact dimensions. Further, the capsule is preferably easy and economical to manufacture in automated mass production.

### Description of the Invention

An object of the invention may be achieved by an ultrasound flow meter capsule comprising a housing and an insert. The housing may comprise an aperture forming an open end to an internal cavity with a cavity surface extending towards a closed end. The insert may comprise an outer surface and an inner surface forming a measuring channel having a measuring channel inlet and a measuring channel outlet. The measuring channel may be configured with a measuring channel axis extending from the measuring channel inlet to the measuring channel outlet.

An ultrasound flow meter capsule wherein the insert may be arranged in the internal cavity with the measuring channel inlet arranged towards the cavity closed end, with the cavity surface of the housing and the outer surface of the insert arranged to form an outer flow channel with a channel inlet at the cavity open end and to form a turning section at the cavity closed end.

An ultrasound flow meter capsule wherein the internal cavity and the insert are configured to provide an intended flow direction from the channel inlet, via the outer flow channel, via the turning section, and via the measuring channel, to the measuring channel outlet.

An ultrasound flow meter capsule, wherein the insert further comprises two ribs arranged on its outer surface, separated by a rib distance and extending along the outer flow channel between the outer surface of the insert and the cavity surface, thereby providing a flow path.

By rib distance it may be understood a distance between the ribs along the outer surface of the insert. The distance may be measured in a cross-section perpendicular to the intended flow direction. The rib distance may be measured along an arc across the outer flow channel.

The ultrasound flow meter capsule preferably has a measuring channel with sufficient length in accordance with the ultrasound signals to provide precise flow measurements, but sufficiently short to provide a compact flow meter capsule.

The ultrasound flow meter capsule may be designed to be mounted on a corresponding base part via conventional water connection fittings or manifolds. The flow meter capsule may be mounted via an external threading on the housing arranged at the aperture end. However, other connection types may be used for mounting to corresponding base parts.

The ultrasound flow meter capsule may be mounted such that the measuring channel is arranged perpendicular to the fluid flow in the piping comprising the manifold. In other aspects the flow meter capsule may be mounted with other orientations.

In the following, the ultrasound flow meter capsule is in general described and illustrated as being designed for perpendicular mounting via a threaded connection in the connection fitting. However, the application is in no ways limited hereto.

One effect of the embodiment of the ultrasound flow meter capsule is that the fluid to be measured may enter the ultrasound flow meter capsule through the entire channel inlet. The flow may be uneven distributed at the channel inlet; this may include random and uneven flow directions and pressure levels amongst others. After the fluid enters the channel inlet, the fluid may be guided through the flow path, where the flow may be rectified. The rectification of the fluid may be caused by the ribs, the cavity surface and the insert outer surface which may act as walls of a confined channel with which the fluid collides and is deflected back into the channel.

This embodiment may ensure that the fluid enters the turning section and the measuring channel in the same way regardless of the radial orientation of the capsule compared to the flow direction of the fluid when entering the capsule from the manifold. Thus, the ultrasound flow meter capsule may be mounted in the manifold regardless of radial orientation of the capsule.

The threading in different manifolds may have different starting points, which may result in different radial orientation for each capsule. This may also be the case for other connection types, e.g. compression fitting where flanges are pressed together and may be mounted without consideration of radial orientation. Hence, when mounting the capsule no considerations to symmetry should be taken.

Another effect of the flow path may be that each incident of deflection may inflict flow resistance or pressure loss in parts of the fluid, which may interact with the remaining fluid and introduce random flow disturbances to the fluid while in the flow path. This may be beneficial in regard to further rectifying the flow before it enters the turning section and the measuring channel.

In one embodiment of the ultrasound flow meter capsule, the flow path gradually narrows down in the intended flow direction.

One effect of this embodiment may be that the flow path may acts as a funnel rectifying the flow in the intended flow direction as it is passes through the flow path, thereby an increased linearity and/or repeatability in the flow may be achieved to ensure that the fluid enters the turning section and the measuring channel in the same way regardless of the radial orientation of the capsule compared to the flow direction of the fluid when entering the capsule from the manifold and thus, the embodiment may provide for increased symmetry and/or repeatability in the fluid flow in the measuring channel and thus improved accuracy of the measurements.

Another effect of the narrowing flow path may be that any inflicted flow resistance or pressure loss in portions of the fluid may be distributed more evenly to the remaining fluid due to the confinement of space. A further effect may be that the fluid experiences an increasing pressure as it travels through the flow path. This may have the advantage that when entering the turning section a pressure drop may occur and the fluid may be symmetrically distributed in the turning section. This may provide for a symmetrical and linearly distributed flow in the measuring channel. Furthermore, any distortions, swirls and/or eddies present in the fluid when travelling through the flow path may be destroyed due to the change in pressure at the turning section. This may provide for increased symmetry and/or repeatability in the fluid flow in the measuring channel and thus improved accuracy of the measurements.

According to the present invention, the rib distance may gradually narrow down in the intended flow direction, such that the rib distance closest to the measuring channel outlet is larger than the rib distance closest to the measuring channel inlet.

One effect of this embodiment may, similar to the above-described embodiment, be that the flow path may act as a funnel rectifying the flow in the intended flow direction as it passes through the flow path. However, for this embodiment the flow path may especially be narrowed along the outer surface of the insert in a cross-section perpendicular to the intended flow direction. This may be especially beneficial in cases where the flow meter capsule is mounted such that the flow path is not symmetrically aligned with the flow direction of the fluid when entering the capsule. In such case, a large part of the fluid may at first instance collide with the ribs rather than the insert outer surface or the cavity surface and thus the flow may mainly be rectified by the deflection from the ribs. Furthermore, it may be beneficial because a pressure change is caused by the ribs and inwards to the center of the flow path and this may provide for yet a further increment of the radial symmetry. This may provide for increased symmetry and/or repeatability in the fluid flow in the measuring channel and thus improved accuracy of the measurements.

In one embodiment of the ultrasound flow meter capsule, the two ribs may be mirror symmetric around a symmetry plane. The symmetry plane may extend in the intended flow direction and be spanned by the outer surface of the insert and the cavity surface.

One effect of this embodiment may, similar to the above-described embodiment, be that the flow path may rectify the flow in the intended flow direction as it passes through the flow path. Furthermore, for this embodiment a further symmetry feature is introduced to the flow path. This may be beneficial in regard to achieving a symmetric flow in the capsule and may especially be beneficial in cases where the flowmeter capsule is mounted such that the flow path is not symmetrically aligned with the flow direction of the fluid when entering the capsule. In such case, a large part of the fluid may at first instance collide with the ribs rather than the insert outer surface or the cavity surface, and thus the flow may be mainly rectified by the deflection from the ribs. Furthermore, it may be beneficial because a pressure change is caused by the ribs and inwards to the center of the flow path and this may provide for yet a further increment of the radial symmetry. This may in accordance with the previous embodiments provide for increased symmetry and/or repeatability in the fluid flow in the measuring channel and thus improved accuracy of the measurements.

In one embodiment of the ultrasound flow meter capsule, the cavity of the housing may be configured with a cavity centre axis extending from the open end to the closed end. The insert may be arranged with the measuring channel axis substantially coaxial with the cavity centre axis inside the cavity.

One effect of this embodiment may, similar to the above-described embodiments, be that a further symmetry feature is introduced into the flow path. But this embodiment introduces an additional symmetry feature, which is that the measuring channel may be symmetrically arranged compared to the closed end of the cavity thereby introducing symmetry into the turning section. This may, in accordance with the previous embodiments, provide for increased symmetry and/or repeatability in the fluid flow in the measuring channel and thus improved accuracy of the measurements.

In one embodiment of the ultrasound flow meter capsule, the measuring channel may be substantially linear from the measuring channel inlet to the measuring channel outlet. The cavity may be substantially cylindrical. The measuring channel axis and the cavity centre axis may coincide when the insert is arranged in the cavity.

One effect of this embodiment may be that the fluid does not experience any obstacles while travelling through the measuring channel that could introduce pressure changes and/or disturbances into the flow profile in the measuring channel. This may be advantageous in regard to achieving a uniform flow profile along a measuring path which may provide for improved accuracy of the measurements. Furthermore, a symmetric flow across the measuring channel may be advantageously achieved and may provide for repeatability of the measurements even in cases where the measuring path may be misaligned with the centre of the flow profile.

In one embodiment of the ultrasound flow meter capsule, the insert may comprise a measuring channel extension at the measuring channel inlet. The measuring channel extension may be arranged to extend the insert in the direction of the measuring channel axis. The measuring channel extension may be arranged to be mirror symmetric around the symmetry plane.

The measuring channel extension may introduce an additional symmetry feature.

In one aspect, the channel extension may be arranged in extension of the flow path and may have the effect of controlling the direction of the fluid entering into the turning section.

In one aspect, the channel extension may be arranged opposite to the flow path and may have the effect of controlling the direction of the fluid entering into the measuring channel.

In both cases, the additional symmetry feature may be designed to interact with the cavity closed end which may be advantageous in regard to achieving further improvements to the flow profile entering the measuring channel.

In one embodiment of the ultrasound flow meter capsule, the measuring channel may be adapted for receiving and positioning a reflector arrangement defining a part of a measuring path.

In one aspect, the reflector arrangement may comprise a single reflector. In another aspect, the reflector arrangement may comprise multiple reflectors.

The reflector(s) may be arranged according to the position of any ultrasound transducer in the flow meter capsule. The ultrasound transducers may be top-mounted and/or side-mounted in the capsule. Top-mounted refers to an ultrasound transducer arranged at the cavity closed end and being positioned to transmit a signal in a direction substantially parallel to the intended flow direction in the measuring channel. Side-mounted refers to an ultrasound transducer arranged at the wall of the cavity and being positioned of transmit a signal in a direction substantially perpendicular to the intended flow direction in the measuring channel.

In one embodiment, the reflector arrangement comprises two reflectors separated by a distance defining the measuring path. The ultrasound transmitters may be side-mounted in the cavity.

One effect of this embodiment may be that any turbulence or disturbance of the flow in the turning section is not part of the measuring path. This may be advantageous in regard to achieving a uniform flow profile along the entire measuring path for improved accuracy of the measurements.

However, the reflector closest to the turning section may be a disturbing element in the travel of the fluid from the flow path into the turning section and again from the turning section into the measuring channel. Furthermore, the reflector may be exposed to pressure from the fluid flow where an uneven pressure may cause deflection of the reflector and thus change the length of the measuring path.

Hence, the positioning of the reflector may give rise to consideration as to how to obtain a symmetric and linear flow profile along the measuring path, how to obtain a repeatable measuring path, and/or how to obtain as long a measuring path as possible in consideration of the overall dimensions of the flow meter capsule.

These considerations may be meet by placing the reflector closest to the turning section relative to the measuring channel extension, such that the reflector is protected by the measuring channel extension and such that the reflector is aligned symmetrically with the flow profile. By arranging the reflector in connection with the measuring channel extension, the measuring path may be extended accordingly. Thus, the considerations and possible disturbances mentioned above may be mitigated by a careful design of the reflector arrangement, the insert and the cavity closed end.

In one embodiment of the ultrasound flow meter capsule, the turning section may comprise guiding means on the cavity surface.

In continuation of the previous discussions concerning the interaction between the insert and the cavity providing a turning section with certain features, this embodiment may thus provide additional features influencing the flow profile and increasing the requested properties, such as symmetry, linearity and repeatability for achieving a flow profile in the measuring channel being uniform along the entire measuring path and symmetric across the measuring channel for improved accuracy of the measurements.

In one embodiment of the ultrasound flow meter capsule, the turning section comprises at least two guiding means arranged mirror symmetrically around the symmetry plane.

As for the previous embodiments, adding symmetric features which are symmetric according to the same plane or axes as the remaining features of the device may further improve the flow profile in the measuring channel for improved accuracy of the measurements.

In one embodiment, the measuring channel extension and the guiding means in the turning section are designed to form an opening with a substantially uniform spacing through which the fluid travels from the outer flow channel to the turning section. This may be advantageous in regard to obtaining a uniform and symmetric flow profile entering into the measuring channel.

In this embodiment, the reflector closest to the turning section may act as a guiding feature in combination with the at least two guiding means for guiding the flow in the turning section and introducing a flow direction turning along the turning section and into the measuring channel, i.e. this embodiment may introduce a guiding path which continuously rectifies the flow and eliminates flow disturbing elements which may create distortions, swirls and/or eddies and cause non-symmetrical flow profiles; thereby achieving an advantageous swirl-free, symmetrical and repeatable flow profile in the measuring channel and especially along the measuring path, thereby improving linearity and repeatability of the ultra sound flow meter.

In one embodiment of the ultrasound flow meter capsule, the insert may comprise one or more fins arranged on the outer surface, such that the outer flow channel comprises one or more fins.

In one aspect, the one or more fins extend(s) from the outer surface of the insert to the cavity surface.

The fins may act as disturbing elements, redirection elements, or a combination of both. The flow profile in the flow path may be rectified, but may, due to the radial orientation of the capsule relative to the flow direction in the piping, comprise an asymmetry, have a flow direction being tilted compared to the flow path or still comprise other non-linear flow effects. One effect of the fin or fins may be to act as an obstacle which disturbs the fluid and causes a mixing of the fluid which then unifies in a new flow profile. Another effect of an embodiment, preferably with multiple fins, may be that the fins provide a redirection of the flow direction towards the intended flow direction, thereby advantageously achieving for the fluid to enter the turning section and the measuring channel in the same way regardless of the radial orientation of the capsule compared to the flow direction of the fluid when entering the capsule from the manifold. Thus, a repeatable flow and flow profile may be achieved in the measuring flow meter and most importantly in the measuring path regardless of radial orientation of the capsule when mounted in a manifold.

In one embodiment of the ultrasound flow meter capsule, the housing may comprise two ultrasound transducers, cavity locking means and two transmitter apertures for transmitting an ultrasound signal. The insert may comprise a through-going measuring aperture from the outer surface to the inner surface and insert locking means adapted to engage with the cavity locking means for positioning the insert, such that one transmitter aperture in the housing may be aligned with the measuring aperture of the insert.

This embodiment may comprise features to interact with the embodiment comprising a reflector arrangement. Alternatively, reflectors may be incorporated using different reflector arrangements.

One effect of this embodiment may be that at least one ultrasound transducer is side-mounted with a corresponding signal path entering through the measuring aperture into/out from the measuring channel and thereby achieving that the second transducer may be top-mounted or side-mounted. Furthermore, it may be achieved that the second transducer may be mounted in such a way, that the signal path does not require further measuring apertures in the insert, which may disturb the flow at a position at or just before the beginning to the measuring path.

In one embodiment, two ultrasound transducers may be side-mounted with a signal path passing through only one measuring aperture to or from the measuring channel, and the measuring aperture may be downstream from the measuring path. Upstream the signal path may pass from the measuring channel to the transmitter aperture in the housing using a reflector arranged outside of the measuring channel, with the advantage of omitting any disturbing features which may cause disturbances in the flow profile while traveling through or just before entering the measuring path.

With the side-mounted transducers and using two reflectors, a signal path may be achieved which substantially comprises 90 degree bends, and the signal path between the reflectors being the measuring path. This embodiment may be comparable to the previously described embodiment with a reflector arrangement comprising two reflectors separated by a distance defining the measuring path with the ultrasound transmitters side-mounted in the cavity. And hence, the effects and advantages of the two embodiments may be comparable, i.e. the embodiments where the turning section may not form part of the measuring path and the embodiments where the upstream reflector may act as guiding means.

One effect of the locking means may be to act as guiding means during assembly to ensure correct positioning of the insert in the cavity. Furthermore, the locking means may provide stability of the ultrasound flow meter capsule when in use, thereby reducing dislocation of the individual elements and/or fatigue due to the forces of the fluid when in use.

In one embodiment of the ultrasound flow meter capsule, the housing, the insert or both may be monoliths.

One effect of this embodiment may be that the ultrasound flow meter capsule may be manufactured as two single parts, i.e. the housing and the insert as individual parts.

In one aspect, one or both parts may be made of a polymeric material. Thus, both parts may be formed by injection moulding of a polymeric material, which is a method suited for low cost mass production.

In another aspect, one or both parts may be formed by additive manufacturing including 3D printing. The parts may be made of suitable materials, such as metal polymeric material.

The parts may be single injection moulded parts or made by a single additive manufacturing process. Hereby, the number of single components of the capsule can be kept to a minimum, which may further provide for keeping the assembly process to a minimum.

In one embodiment, the ultrasound flow meter capsule may further comprise a channel inlet guide. The channel inlet guide may be adapted to be inserted and positioned in the inlet channel between the housing and the insert. The inlet guide may comprise guiding fins configured for an intended flow in the outer flow channel in the intended flow direction.

In one aspect, the channel inlet guide may comprise an outer wall being an annular ring.

In a further aspect, the guiding fins may be arranged perpendicular to the outer wall.

In another aspect, the channel inlet guide may comprise locking means adapted to interlock with the insert and/or the housing.

In yet another aspect, the insert may comprise recesses on the outer surface at the channel outlet end, and the recesses may be adapted to receive the guiding fins of the channel inlet guide.

The channel inlet guide may have the effect of redirecting the fluid entering from a manifold into the outer flow channel. The channel inlet guide may, due to the guiding fins, divide the entering fluid into smaller portions and thereby reduce the force acted on the individual guiding fins by the fluid. This may be advantageous in regard to performing a first rectification of the fluid into the outer flow channel.

In one aspect of the invention, the ribs may be arranged on the cavity surface.

In one aspect of the invention, the fin or fins may be arranged on the cavity surface.

In one aspect, the housing and the insert may be one part manufactured by additive manufacturing.

In one aspect, the insert and the channel inlet guide may be one part manufactured by additive manufacturing.

In one aspect, the housing, the insert and the channel inlet guide may be one part manufactured by additive manufacturing.

### Description of the Drawing

Embodiments of the invention will be described in the figures, whereon:
Fig. 1 illustrates an embodiment of the housing.
Fig. 2 illustrates two embodiments of the insert.
Fig. 3 illustrates an embodiment of the ultrasound flow meter capsule.
Fig. 4 illustrates an embodiment of the ultrasound flow meter capsule.
Fig. 5 illustrates an embodiment of the insert with and without the reflector arrangement.
Fig. 6 illustrates an embodiment of the housing.
Fig. 7 illustrates an embodiment of the channel inlet guide.
Fig. 8 illustrates an embodiment of the ultrasound flow meter capsule.

### Detailed Description of the Invention

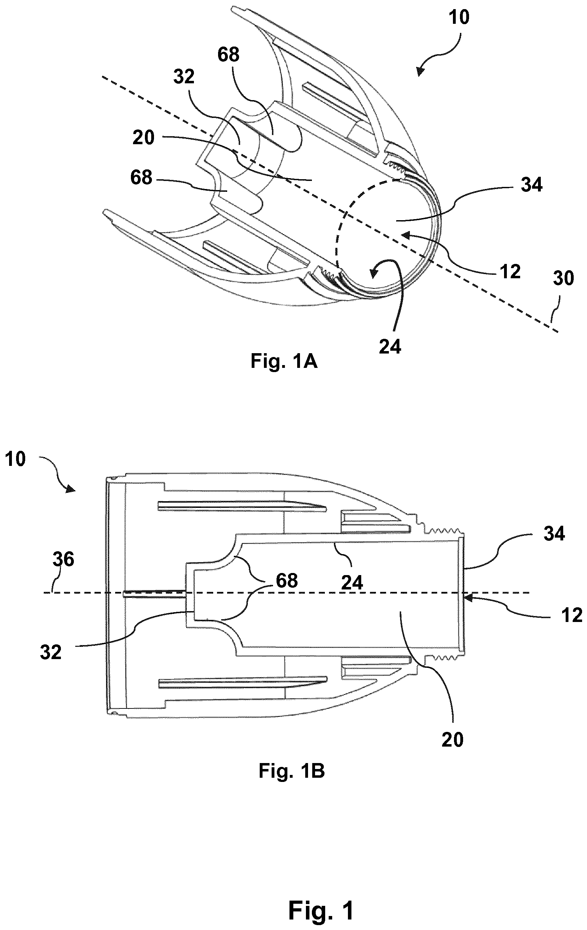

Figure 1 illustrates an embodiment of the housing 10. Figure 1A illustrates the housing in a perspective view with an intersecting cut. Figure 1B illustrates the housing from a side view with an intersecting cut through the centre.

The housing 10 comprises an aperture 12 forming an open end 34 to an internal cavity 20. The cavity 20 has a cavity surface 24 and extends towards a closed end 32. The cavity has a cavity centre axis 30.

The housing furthermore comprises two guiding means 68 on the cavity surface 24 at the cavity closed end 32. These are arranged mirror symmetric around a symmetry plane 36 illustrated by the dashed line. Here, the symmetry plane 36 coincides with the cavity centre axis 30 and is perpendicular to the intersecting view cut in figure 1B.

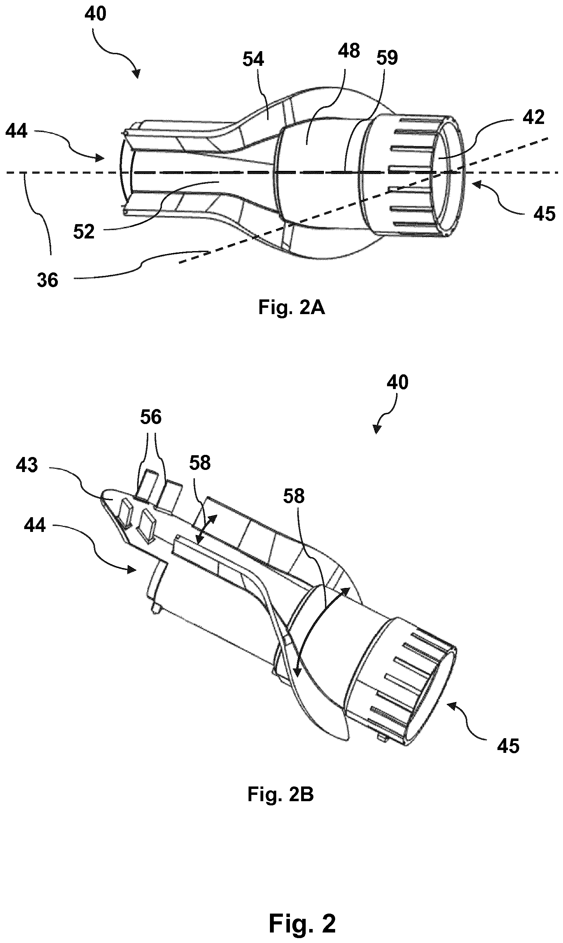

Figure 2 illustrates two embodiments of the insert. Figure 2A illustrates an insert in a perspective view seen from the side. Figure 2B also illustrates an insert in a perspective view, but seen from a different angle. The embodiment illustrated in figure 2B comprises, in addition to the embodiment illustrated in figure 2A, a measuring channel extension 43 and fins 56. The reference numbers from figure 2A are not necessarily repeated on figure 2B and vice versa.

The insert 40 comprises an outer surface 48 and an inner surface 46 forming a measuring channel 42. The measuring channel 42 has a measuring channel inlet 44 and a measuring channel outlet 45. The measuring channel 42 is configured with a measuring channel axis 59 ― illustrated by the bold dashed line - extending from the measuring channel inlet 44 to the measuring channel outlet 45.

The insert 40 furthermore comprises two ribs 54 arranged on the outer surface 48. The ribs 54 are separated by a rib distance 58 measured along the outer surface 48 of the insert in a cross-section perpendicular to the intended flow direction. The ribs 54 extend along the measuring channel 42 on the outer surface 48 of the insert. The insert 40 has mirror symmetry around a symmetry plane 36, illustrated by the two dashed lines. The ribs 54 provides for a flow path which may be further defined by the outer surface 48 of the insert 40 and the cavity surface, when the insert is arranged in the intended position in the cavity of the housing.

The insert illustrated in figure 2B comprises a measuring channel extension 43 arranged at the measuring channel inlet 44. The measuring channel extension 43 extends the insert in the direction of the measuring channel axis (59) is mirror symmetric around the symmetry plane (36).

The insert illustrated in figure 2B comprises fins 56 arranged on the outer surface 48. The fins are also arranged mirror symmetric around the symmetry plane 36.

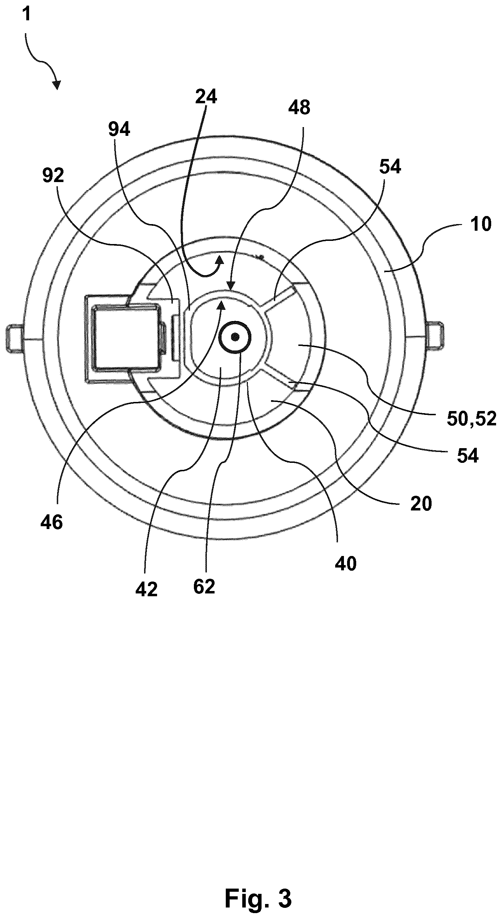

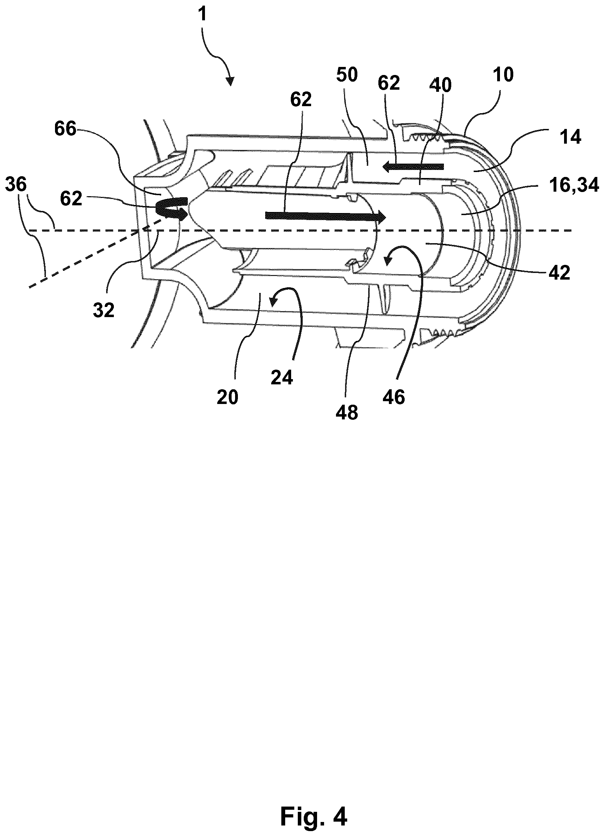

Figures 3 and 4 illustrate an embodiment of the ultrasound flow meter capsule 1. Figure 3 shows a cross-section of the ultrasound flow meter capsule 1 perpendicular to the intended flow direction 62 seen from the cavity open end.

Figure 4 illustrates the ultrasound flow meter capsule 1 in a perspective view and with an intersecting cut through the centre parallel to the flow direction 62.

The reference numbers from figure 3 are not necessarily repeated in figure 4 and vice versa and the following description will refer to both figures.

The ultrasound flow meter capsule 1 comprises a housing 10 and an insert 40 arranged in the cavity 20 of the housing. The housing 10 comprises an open end 34 to the internal cavity 20. The cavity 20 has a cavity surface 24 and extends towards a closed end 32 comprising the turning section 66.

The insert 40 comprises an outer surface 48 and an inner surface 46 forming a measuring channel 42.

The cavity surface 24 and the outer surface 48 of the insert 40 form an outer flow channel 50 with a channel inlet 14 at the cavity open end 34 and a turning section 66 at the cavity closed end 32. The internal cavity 20 and the insert provides an intended flow direction 62 from the channel inlet 14, via the outer flow channel 50, via the turning section 66, and via the measuring channel 42, to the channel outlet 16. The insert comprises ribs 54 on the outer surface 48, and the ribs define a flow path 52.

The illustrated embodiment of the ultrasound flow meter capsule 1 has mirror symmetry around a symmetry plane 36, illustrated in figure 4 by the dashed lines.

The illustrated embodiment of the ultrasound flow meter capsule 1 furthermore comprises cavity locking means 92 and insert locking means 94. The cavity locking means 92 comprise a protrusion on the cavity surface 24 with a flat surface. The insert locking means 94 likewise comprise elements with a flat surface, but on the outer surface 48 of the insert 40. These surfaces position and interlock the insert and the housing in a relative rotational position.

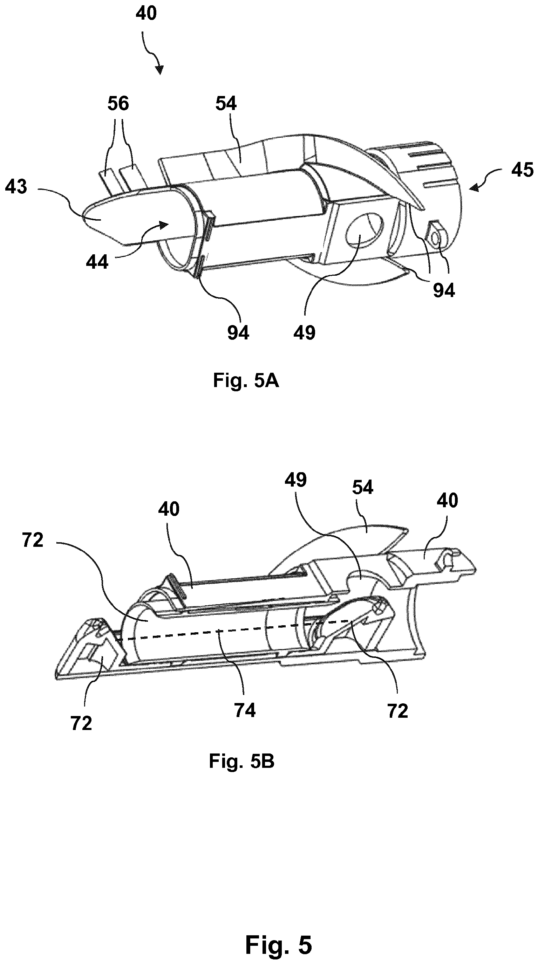

Fig. 5 illustrates an embodiment of the insert 40 with a measuring aperture 49. Figure 5A illustrates the insert in a perspective view. Figure 5B illustrates the insert 40 with a reflector arrangement 72 arranged in the insert 40.

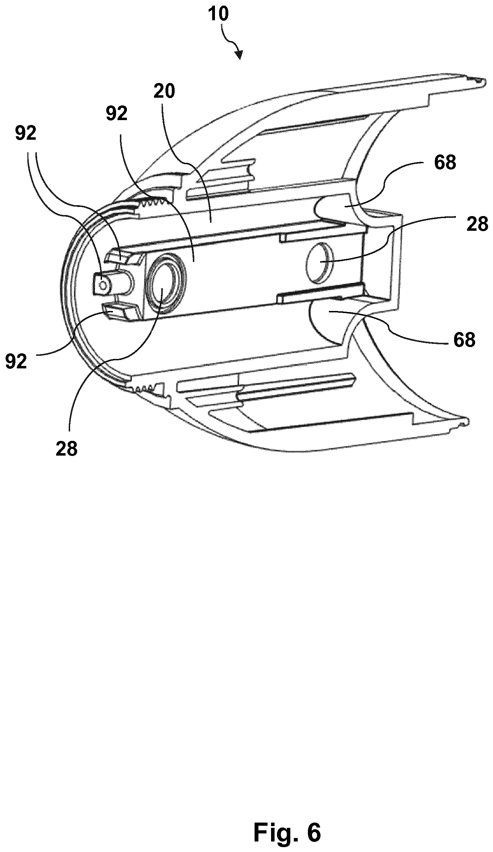

The insert 40 comprises fins 56 and ribs 54 on the outer surface. The insert comprises a measuring channel with a measuring channel inlet 44 and a measuring channel outlet 45. The insert also comprises a measuring channel extension 43 arranged at the measuring channel inlet 44 and extends the insert 40 in the direction of the measuring channel. On figure 5A insert locking means 94 are illustrated comprising elements with flat surfaces in accordance with the embodiments illustrated in figures 3 and 4. The insert locking elements furthermore comprise a protrusion with a through-going hole which may be adapted to interlock with locking means comprised in the housing and/or in the channel inlet guide as illustrated in figures 6, 7 and 8.

The reflector arrangement 72 illustrated in figure 5B and arranged in the insert 40 comprises two reflectors arranged with a 45 degree tilt compared to the measuring channel. The reflectors span the measuring path 74 being parallel to the intended flow direction. The reflector arrangement may be used with side-mounted ultrasound transducers in the housing. The insert only comprises one measuring aperture 49.

The measuring aperture and one of the reflectors are arranged on a line being perpendicular to the measuring path 74 and substantially perpendicular to the flow direction and thus this part of the signal path may not contribute to the measurement. The measuring aperture 49 and the reflector are arranged downstream from the intended flow and at the end of the measuring path. Thus, any disturbances caused by these features in the flow may not appear in the measuring path.

The other reflector in the reflector arrangement 72 is arranged in connection to the measuring channel extension and is thus arranged upstream from the measuring channel inlet 44. The reflector may form guiding means and may therefore not cause obstructions to the flow profile, but may rather support the flow through the ultrasound flow meter capsule 1.

Figure 6 illustrates an embodiment of the housing 10 in a perspective view and with an intersection cut through the centre parallel to the flow direction. The housing 10 comprises two guiding means 68 and multiple cavity locking means 92 in the cavity 20. The housing 10 comprises two transmitter apertures 28. The transmitter apertures 28 are arranged in the cavity locking means 92. The cavity locking means 92 comprises a protrusion with a flat surface, which flat surface may interlock with the insert illustrated in figure 5. The housing 10 also comprises cavity locking means 92 at the cavity open end, which may be adapted to interlock with respectively the ribs 54 and the protrusion with a through-going hole 94 from figure 5.

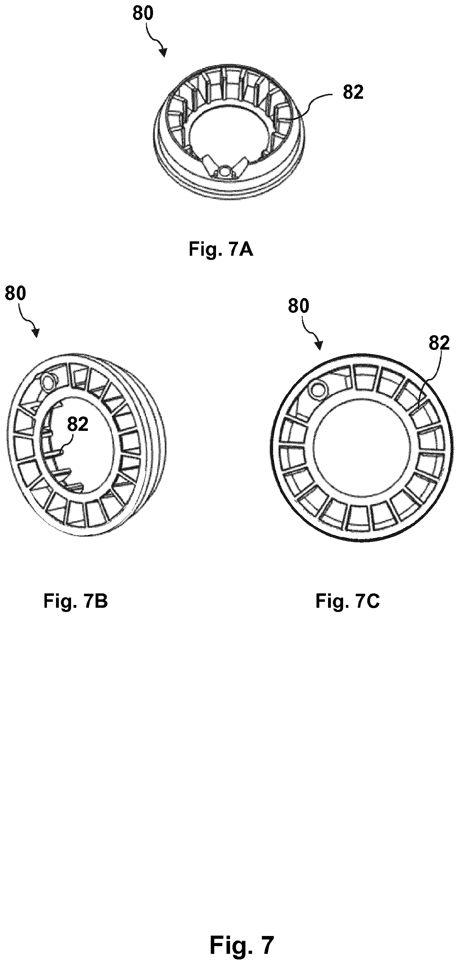

Figure 7 illustrates an embodiment of the channel inlet guide 80, where figure 7A illustrates the channel inlet guide 80 in a perspective view from a lower side, figure 7B illustrates the channel inlet guide 80 in a perspective view from an upper side, and figure 7C illustrates the channel inlet guide 80 from an upper side.

The embodiment of the channel inlet guide 80 comprises guiding fins 82 configured for guiding an intended flow into the outer flow channel in the intended flow direction.

The illustrated embodiment of the channel inlet guide comprises an outer wall being an annular ring. The guiding fins 82 are arranged perpendicular to the outer wall. Furthermore, the channel inlet guide 80 comprises locking means adapted to interlock with the insert and/or the housing via the insert locking means 94 in the shape of a protrusion with a through-going hole 94 (see figure 5) and the cavity locking means 92 at the cavity open end (see figure 6).

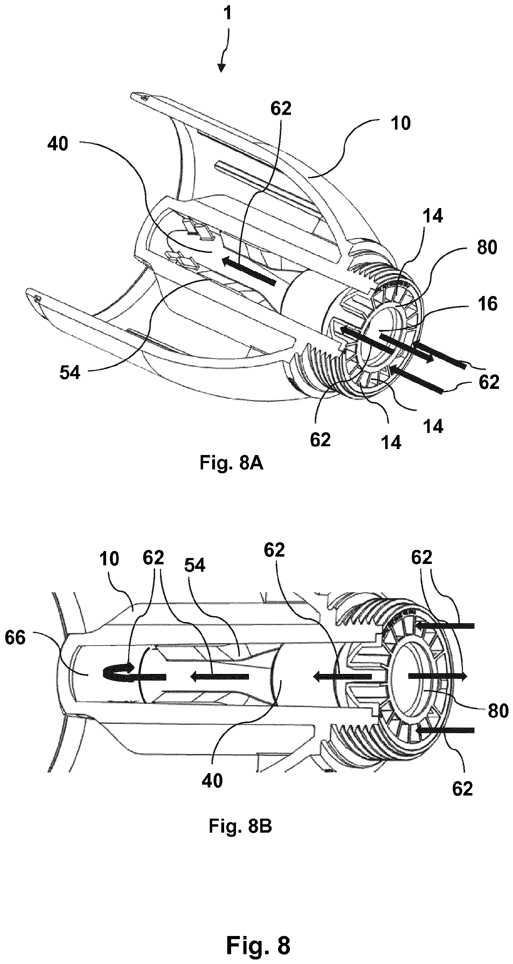

Fig. 8 illustrates an embodiment of the ultrasound flow meter capsule 1. Figure 8A illustrates the ultrasound flow meter capsule 1 in a perspective view seen from the channel inlet side. Figure 8B illustrates a cut-out of the ultrasound flow meter capsule 1 also in a perspective view but seen from the side. The cut-out illustrates the centre part of the ultrasound flow meter capsule 1 comprising the flow channels.

The ultrasound flow meter capsule 1 comprises a housing 10, an insert 40 and a channel inlet guide 80. The channel inlet guide 80 is arranged at the channel inlet 14 between the housing 10 and the insert 40. The intended flow direction 62 in the ultrasound flow meter capsule 1 is illustrated by the bold black arrows. The internal cavity and the insert provides an intended flow direction 62 from the channel inlet 14, via the outer flow channel which is further defined by the ribs 54, via the turning section 66, and via the measuring channel, to the channel outlet 16.
- No: Item
- 1: Ultrasound flow meter capsule
- 10: Housing
- 12: Aperture
- 14: Channel inlet
- 16: Channel outlet
- 20: Cavity
- 24: Cavity surface
- 28: Transmitter aperture
- 30: Cavity centre axis
- 32: Closed end
- 34: Open end
- 36: Symmetry plane
- 40: Insert
- 42: Measuring channel
- 43: Measuring channel extension
- 44: Measuring channel inlet
- 45: Measuring channel outlet
- 46: Inner surface (insert)
- 48: Outer surface (Insert)
- 49: Measuring aperture
- 50: Outer flow channel
- 52: Path
- 54: Rib
- 56: Fin
- 58: Rib distance
- 59: Measuring channel axis
- 60: Flow channel
- 62: Flow direction (intended)
- 64: Flow profile
- 66: Turning section
- 68: Guiding means
- 70: Ultrasound-transducer
- 72: Reflector arrangement
- 74: Measuring path
- 80: Channel inlet guide
- 82: Guiding fin
- 92: Cavity locking means
- 94: Insert locking means

## Claims

1. Ultrasound flow meter capsule (1) comprising a housing (10) and an insert (40), the housing (10) comprises an aperture (12) forming an open end (34) to an internal cavity (20) with a cavity surface (24) extending towards a closed end (32), and the insert (40) comprises an outer surface (48) and an inner surface (46) forming a measuring channel (42) having a measuring channel inlet (44) and a measuring channel outlet (45), wherein the measuring channel (42) is configured with a measuring channel axis (59) extending from the measuring channel inlet (44) to the measuring channel outlet (45), wherein the insert (40) is arranged in the internal cavity (20) with the measuring channel inlet (44) arranged towards the cavity closed end (32), the cavity surface (24) of the housing (10) and the outer surface (48) of the insert (40) are arranged to form an outer flow channel (50) with a channel inlet (14) at the cavity open end (34) and to form a turning section (66) at the cavity closed end (32), wherein the internal cavity (20) and the insert (40) are configured to provide an intended flow direction (62) from the channel inlet (14), via the outer flow channel (50), via the turning section (66), and via the measuring channel (42), to the measuring channel outlet (45), **characterized in that** the insert (40) further comprises two ribs (54) arranged on its outer surface (48), separated by a rib distance (58) and extending along the outer flow channel (50) between the outer surface (48) of the insert (40) and the cavity surface (24), thereby providing a flow path (52) extending between the channel inlet (14) and the turning section (66) and where the rib distance (58) gradually narrows down in the intended flow direction (62) such that the rib distance (58) closest to the measuring channel outlet (45) is larger than the rib distance (58) closest to the measuring channel inlet (44).

2. The ultrasound flow meter capsule (1) according to claim 1 wherein two ribs (54) are mirror symmetric around a symmetry plane (36) extending in the intended flow direction (62) and spanned by the outer surface (48) of the insert (40) and the cavity surface (24).

3. The ultrasound flow meter capsule (1) according to any one or more of the preceding claims, wherein the cavity (20) of the housing (10) is configured with a cavity centre axis (30) extending from the open end (34) to the closed end (32), and the insert (40) is arranged with the measuring channel axis (59) substantially coaxial with the cavity centre axis (30) inside the cavity (20).

4. The ultrasound flow meter capsule (1) according to any one or more of the preceding claims, wherein the measuring channel (42) is substantially linear from the measuring channel inlet (44) to the measuring channel outlet (45), the cavity (20) is substantially cylindrical, and the measuring channel axis (59) and the cavity centre axis (30) are coinciding when the insert (40) is arranged in the cavity (20).

5. The ultrasound flow meter capsule (1) according to any one or more of the preceding claims, wherein the insert comprises a measuring channel extension (43) extending from the measuring channel inlet into the turning section and wherein the measuring channel extension is mirror symmetric around the symmetry plane (36).

6. The ultrasound flow meter capsule (1) according to any one or more of the preceding claims, wherein the measuring channel (42) is adapted for receiving and position a reflector arrangement (72) defining a part of a measuring path (74).

7. The ultrasound flow meter capsule (1) according to any one or more of the preceding claims, wherein the turning section (66) comprises guiding means (68) on the cavity surface (24).

8. The ultrasound flow meter capsule (1) according to claim 7, wherein the turning section (66) comprises at least two guiding means (68) arranged mirror symmetrically around the symmetry plane (36).

9. The ultrasound flow meter capsule (1) according to any one or more of the preceding claims, wherein the insert (40) comprises one or more fins (56) arranged on the outer surface (48) such that the outer flow channel (50) comprises one or more fins (56).

10. The ultrasound flow meter capsule (1) according to any one or more of the preceding claims, wherein the housing (10) comprises two ultrasound transducers (70), cavity locking means (92) and two transmitter apertures (28) for transmitting an ultrasound signal, and the insert (40) comprises a through-going measuring aperture (49) from the outer surface (48) to the inner surface (46) and insert locking means (94) adapted to engage with the cavity locking means (92) for positioning the insert (40), such that one transmitter aperture (28) is aligned with the measuring aperture (49) of the insert (40).

11. The ultrasound flow meter capsule (1) according to any one or more of the preceding claims, wherein the housing (10), the insert (40) or both are monoliths.

12. The ultrasound flow meter capsule (1) according to any one or more of the preceding claims, further comprising a channel inlet guide (80) adapted to be inserted and positioned in the inlet channel (14) between the housing (10) and the insert (40), said inlet guide (80) comprises guiding fins (82) configured for an intended flow in the outer flow channel (50) in the intended flow direction (62).

## Patentansprüche

1. Ultraschalldurchflussmesskapsel (1), umfassend ein Gehäuse (10) und einen Einsatz (40), wobei das Gehäuse (10) eine Öffnung (12) umfasst, die ein offenes Ende (34) zu einem inneren Hohlraum (20) mit einer Hohlraumfläche (24), die sich in Richtung eines geschlossenen Endes (32) erstreckt, bildet, und wobei der Einsatz (40) eine äußere Fläche (48) und eine innere Fläche (46) umfasst, die einen Messkanal (42) mit einem Messkanaleinlass (44) und einem Messkanalauslass (45) bilden, wobei der Messkanal (42) mit einer Messkanalachse (59) konfiguriert ist, die sich von dem Messkanaleinlass (44) zu dem Messkanalauslass (45) erstreckt, wobei der Einsatz (40) in dem inneren Hohlraum (20) angeordnet ist, wobei der Messkanaleinlass (44) in Richtung des geschlossenen Endes (32) des Hohlraums angeordnet ist, wobei die Hohlraumfläche (24) des Gehäuses (10) und die äußere Fläche (48) des Einsatzes (40) dazu angeordnet sind, einen äußeren Durchflusskanal (50) mit einem Kanaleinlass (14) an dem offenen Ende (34) des Hohlraums zu bilden und einen Wendeabschnitt (66) an dem geschlossenen Ende (32) des Hohlraums zu bilden, wobei der innere Hohlraum (20) und der Einsatz (40) dazu konfiguriert sind, eine beabsichtigte Durchflussrichtung (62) von dem Kanaleinlass (14) über den äußeren Durchflusskanal (50), über den Wendeabschnitt (66) und über den Messkanal (42) zu dem Messkanalauslass (45) bereitzustellen, **dadurch gekennzeichnet, dass** der Einsatz (40) ferner zwei Rippen (54) umfasst, die an dessen äußerer Fläche (48) angeordnet sind, getrennt durch einen Rippenabstand (58) und sich entlang des äußeren Durchflusskanals (50) zwischen der äußeren Fläche (48) des Einsatzes (40) und der Hohlraumfläche (24) erstreckend, wodurch ein Durchflusspfad (52) bereitgestellt wird, der sich zwischen dem Kanaleinlass (14) und dem Wendeabschnitt (66) erstreckt und wobei sich der Rippenabstand (58) schrittweise in der beabsichtigten Durchflussrichtung (62) verringert, sodass der Rippenabstand (58), der am nächsten zu dem Messkanalauslass (45) liegt, größer als der Rippenabstand (58) ist, der am nächsten zu dem Messkanaleinlass (44) liegt.

2. Ultraschalldurchflussmesskapsel (1) nach Anspruch 1, wobei zwei Rippen (54) spiegelsymmetrisch um eine Symmetrieebene (36) liegen, die sich in der beabsichtigten Durchflussrichtung (62) erstreckt und durch die äußere Fläche (48) des Einsatzes (40) und die Hohlraumfläche (24) überspannt wird.

3. Ultraschalldurchflussmesskapsel (1) nach einem oder mehreren der vorstehenden Ansprüche, wobei der Hohlraum (20) des Gehäuses (10) mit einer Hohlraummittelachse (30), die sich von dem offenen Ende (34) zu dem geschlossenen Ende (32) erstreckt, konfiguriert ist und der Einsatz (40) mit der Messkanalachse (59) im Wesentlichen koaxial zu der Hohlraummittelachse (30) innerhalb des Hohlraums (20) angeordnet ist.

4. Ultraschalldurchflussmesskapsel (1) nach einem oder mehreren der vorstehenden Ansprüche, wobei der Messkanal (42) im Wesentlichen linear von dem Messkanaleinlass (44) zu dem Messkanalauslass (45) verläuft, der Hohlraum (20) im Wesentlichen zylindrisch ist und die Messkanalachse (59) und die Hohlraummittelachse (30) zusammenfallen, wenn der Einsatz (40) in dem Hohlraum (20) angeordnet ist.

5. Ultraschalldurchflussmesskapsel (1) nach einem oder mehreren der vorstehenden Ansprüche, wobei der Einsatz eine Messkanalverlängerung (43) umfasst, die sich von dem Messkanaleinlass in den Wendeabschnitt erstreckt, und wobei die Messkanalverlängerung um die Symmetrieebene (36) spiegelsymmetrisch ist.

6. Ultraschalldurchflussmesskapsel (1) nach einem oder mehreren der vorstehenden Ansprüche, wobei der Messkanal (42) zum Aufnehmen und Positionieren einer Reflektoranordnung (72), die einen Teil eines Messpfads (74) definiert, angepasst ist.

7. Ultraschalldurchflussmesskapsel (1) nach einem oder mehreren der vorstehenden Ansprüche, wobei der Wendeabschnitt (66) Führungsmittel (68) an der Hohlraumfläche (24) umfasst.

8. Ultraschalldurchflussmesskapsel (1) nach Anspruch 7, wobei der Wendeabschnitt (66) zumindest zwei Führungsmittel (68) umfasst, die um die Symmetrieebene (36) spiegelsymmetrisch angeordnet sind.

9. Ultraschalldurchflussmesskapsel (1) nach einem oder mehreren der vorstehenden Ansprüche, wobei der Einsatz (40) eine oder mehrere Lamellen (56) umfasst, die an der äußeren Fläche (48) angeordnet sind, sodass der äußere Durchflusskanal (50) eine oder mehrere Lamellen (56) umfasst.

10. Ultraschalldurchflussmesskapsel (1) nach einem oder mehreren der vorstehenden Ansprüche, wobei das Gehäuse (10) zwei Ultraschallwandler (70), Hohlraumverriegelungsmittel (92) und zwei Senderöffnungen (28) zum Übertragen eines Ultraschallsignals umfasst und der Einsatz (40) eine Durchgangsmessöffnung (49) von der äußeren Fläche (48) zu der inneren Fläche (46) und Einsatzverriegelungsmittel (94), die dazu angepasst sind, in die Hohlraumverriegelungsmittel (92) zum Positionieren des Einsatzes (40) einzugreifen, sodass eine Senderöffnung (28) mit der Messöffnung (49) des Einsatzes (40) ausgerichtet ist, umfasst.

11. Ultraschalldurchflussmesskapsel (1) nach einem oder mehreren der vorstehenden Ansprüche, wobei das Gehäuse (10), der Einsatz (40) oder beide einstückig sind.

12. Ultraschalldurchflussmesskapsel (1) nach einem oder mehreren der vorstehenden Ansprüche, ferner umfassend eine Kanaleinlassführung (80), die dazu angepasst ist, in den Einlasskanal (14) zwischen dem Gehäuse (10) und dem Einsatz (40) eingeführt und dort positioniert zu werden, wobei die Einlassführung (80) Führungslamellen (82) umfasst, die für einen beabsichtigten Durchfluss in dem äußeren Durchflusskanal (50) in der beabsichtigten Durchflussrichtung (62) konfiguriert sind.

## Revendications

1. Capsule de débitmètre à ultrasons (1) comprenant un boîtier (10) et un insert (40), le boîtier (10) comprend une ouverture (12) formant une extrémité ouverte (34) sur une cavité interne (20) avec une surface de cavité (24) s'étendant vers une extrémité fermée (32), et l'insert (40) comprend une surface extérieure (48) et une surface intérieure (46) formant un canal de mesure (42) comportant une entrée de canal de mesure (44) et une sortie de canal de mesure (45), dans laquelle le canal de mesure (42) est configuré avec un axe de canal de mesure (59) s'étendant depuis l'entrée de canal de mesure (44) jusqu'à la sortie de canal de mesure (45), dans laquelle l'insert (40) est disposé dans la cavité interne (20) avec l'entrée de canal de mesure (44) disposée vers l'extrémité fermée de cavité (32), la surface de cavité (24) du boîtier (10) et la surface extérieure (48) de l'insert (40) sont disposées pour former un canal d'écoulement extérieur (50) avec une entrée de canal (14) au niveau de l'extrémité ouverte de cavité (34) et pour former une section de retournement (66) au niveau de l'extrémité fermée de cavité (32), dans laquelle la cavité interne (20) et l'insert (40) sont configurés pour fournir une direction d'écoulement prévue (62) depuis l'entrée de canal (14), via le canal d'écoulement extérieur (50), via la section de retournement (66), et via le canal de mesure (42), jusqu'à la sortie de canal de mesure (45), **caractérisée en ce que** l'insert (40) comprend en outre deux nervures (54) disposées sur sa surface extérieure (48), séparées par une distance de nervure (58) et s'étendant le long du canal d'écoulement extérieur (50) entre la surface extérieure (48) de l'insert (40) et la surface de cavité (24), fournissant ainsi un chemin d'écoulement (52) s'étendant entre l'entrée de canal (14) et la section de retournement (66) et où la distance de nervure (58) se rétrécit progressivement dans la direction d'écoulement prévue (62) de telle sorte que la distance de nervure (58) la plus proche de la sortie de canal de mesure (45) soit plus grande que la distance de nervure (58) la plus proche de l'entrée de canal de mesure (44).

2. Capsule de débitmètre à ultrasons (1) selon la revendication 1, dans laquelle deux nervures (54) sont symétriques par rapport à un plan de symétrie (36) s'étendant dans la direction d'écoulement prévue (62) et couvertes par la surface extérieure (48) de l'insert (40) et la surface de cavité (24).

3. Capsule de débitmètre à ultrasons (1) selon l'une quelconque ou plusieurs des revendications précédentes, dans laquelle la cavité (20) du boîtier (10) est configurée avec un axe central de cavité (30) s'étendant de l'extrémité ouverte (34) à l'extrémité fermée (32), et l'insert (40) est disposé avec l'axe de canal de mesure (59) sensiblement coaxial à l'axe central de cavité (30) à l'intérieur de la cavité (20).

4. Capsule de débitmètre à ultrasons (1) selon l'une quelconque ou plusieurs des revendications précédentes, dans laquelle le canal de mesure (42) est sensiblement linéaire depuis l'entrée de canal de mesure (44) jusqu'à la sortie de canal de mesure (45), la cavité (20) est sensiblement cylindrique, et l'axe de canal de mesure (59) et l'axe central de cavité (30) coïncident lorsque l'insert (40) est disposé dans la cavité (20).

5. Capsule de débitmètre à ultrasons (1) selon l'une quelconque ou plusieurs des revendications précédentes, dans laquelle l'insert comprend une extension de canal de mesure (43) s'étendant depuis l'entrée de canal de mesure dans la section de retournement et dans laquelle l'extension de canal de mesure est symétrique par rapport au plan de symétrie (36).

6. Capsule de débitmètre à ultrasons (1) selon l'une quelconque ou plusieurs des revendications précédentes, dans laquelle le canal de mesure (42) est adapté pour recevoir et positionner un agencement de réflecteur (72) définissant une partie d'un chemin de mesure (74).

7. Capsule de débitmètre à ultrasons (1) selon l'une quelconque ou plusieurs des revendications précédentes, dans laquelle la section de retournement (66) comprend des moyens de guidage (68) sur la surface de cavité (24).

8. Capsule de débitmètre à ultrasons (1) selon la revendication 7, dans laquelle la section de retournement (66) comprend au moins deux moyens de guidage (68) disposés de manière symétrique autour du plan de symétrie (36).

9. Capsule de débitmètre à ultrasons (1) selon l'une quelconque ou plusieurs des revendications précédentes, dans laquelle l'insert (40) comprend une ou plusieurs ailettes (56) disposées sur la surface extérieure (48) de telle sorte que le canal d'écoulement extérieur (50) comprenne une ou plusieurs ailettes (56).

10. Capsule de débitmètre à ultrasons (1) selon l'une quelconque ou plusieurs des revendications précédentes, dans laquelle le boîtier (10) comprend deux transducteurs à ultrasons (70), des moyens de verrouillage de cavité (92) et deux ouvertures d'émission (28) pour transmettre un signal ultrason, et l'insert (40) comprend une ouverture de mesure traversante (49) de la surface externe (48) à la surface interne (46) et des moyens de verrouillage d'insert (94) adaptés pour s'engager avec les moyens de verrouillage de cavité (92) pour positionner l'insert (40), de telle sorte qu'une ouverture d'émission (28) soit alignée avec l'ouverture de mesure (49) de l'insert (40).

11. Capsule de débitmètre à ultrasons (1) selon l'une quelconque ou plusieurs des revendications précédentes, dans laquelle le boîtier (10), l'insert (40) ou les deux sont des monolithes.

12. Capsule de débitmètre à ultrasons (1) selon l'une quelconque ou plusieurs des revendications précédentes, comprenant en outre un guide d'entrée de canal (80) adapté pour être inséré et positionné dans le canal d'entrée (14) entre le boîtier (10) et l'insert (40), ledit guide d'entrée (80) comprend des ailettes de guidage (82) configurées pour un écoulement prévu dans le canal d'écoulement extérieur (50) dans la direction d'écoulement prévue (62).
